# EUROPÄISCHE PATENTSCHRIFT

(11) **EP 4 126 400 B1**
(45) Veröffentlichungstag und Bekanntmachung des Hinweises auf die Patenterteilung: **14.05.2025**
(21) Anmeldenummer: 21718499.3
(22) Anmeldetag: 23.03.2021
(51) Int. Cl.: B08B 3/02, B08B 5/02, B08B 5/04, B29C 64/35

(54) **VORRICHTUNG ZUR REINIGUNG VON IM PULVERBETT GEDRUCKTEN DREIDIMENSIONALEN BAUTEILEN VON ANHAFTENDEN PULVERPARTIKELN**
DEVICE FOR CLEANING THREE-DIMENSIONAL COMPONENTS MADE OF ADHESIVE POWDER PARTICLES, SAID COMPONENTS BEING PRINTED IN A POWDER BED
DISPOSITIF DE NETTOYAGE DE COMPOSANTS TRIDIMENSIONNELS CONSTITUÉS DE PARTICULES DE POUDRE ADHÉSIVE, LESDITS COMPOSANTS ÉTANT IMPRIMÉS DANS UN LIT DE POUDRE

(30) Priorität: 30.03.2020 DE 102020108761
(43) Veröffentlichungstag der Anmeldung: 08.02.2023
(73) Patentinhaber: ACTech GmbH, 09599 Freiberg (DE)
(72) Erfinder: FISCHER, Jens, 09603 Großschirma (DE); DEMARCZYK, Norbert, 09629 Reinsberg OT Steinbach (DE); KÄSTNER MAXOVÁ, Hana, 09599 Freiberg (DE)
(74) Vertreter: Rothe, Silke
(86) Internationale Anmeldenummer: PCT/DE2021/100291
(87) Internationale Veröffentlichungsnummer: WO 2021/197543

(56) Entgegenhaltungen:
- DE-A1- 102015 215 728
- DE-A1- 102016 109 212
- DE-A1- 102018 000 814
- DE-B3- 102018 121 915
- DE-U1- 20 006 495
- DE-U1- 8 019 194
- US-B2- 10 189 057

## Beschreibung

Die Erfindung betrifft eine technische Lösung zur Reinigung von im Pulverbett gedruckten dreidimensionalen Bauteilen von anhaftenden Pulverpartikeln, wobei die 3D-gedruckten Bauteile mit einem unterdruckinduzierten Volumenstrom gereinigt werden, indem diese 3D-gedruckten Bauteile nach ihrer Fertigung zunächst aus dem Pulverbett entnommen werden, danach auf einer Zuführvorrichtung positioniert und gemeinsam mit dieser in einen druckdicht abschottbaren Raum verlagert werden, in dessen Innenraum nachfolgend ein Unterdruck aufgebaut und auf das zu reinigende 3D-gedruckte Bauteil ein Fluid-Volumenstrom aufgebracht wird, wodurch Pulverpartikel vom 3D-gedruckten Bauteil gelöst werden, die über mindestens eine mit Unterdruck beaufschlagbare Kanalkontur aus dem druckdicht abschottbaren Raum abgeführt und einer Abscheideeinrichtung zugeführt werden und wobei nachfolgend der druckdicht abschottbare Raum zunächst druckentlastet und danach zur Entnahme des gereinigten 3D-gedruckten Bauteils geöffnet wird.

Für verschiedenartige Anwendungen werden technische Objekte mit Fertigungsverfahren hergestellt, bei denen durch einen aufeinanderfolgenden schichtweisen Auftrag von flüssigem oder pulverförmigem Material ein dreidimensionaler Gegenstand erzeugt wird. Derartige Verfahren werden beispielsweise als additive Fertigung, generative Fertigung oder Rapid-Prototyping bezeichnet und zunehmend unter dem Oberbegriff "3D-Druck" zusammengefasst, der auch im Rahmen der vorliegenden Erfindungsbeschreibung benutzt wird.

Eine diesbezüglich typische Technologie ist die Herstellung von 3D-gedruckten Bauteilen im Pulverbett-Verfahren. Dabei müssen an der Oberfläche der 3D-gedruckten Bauteile anhaftende Restpulverpartikel (zum Beispiel Sand, Kunststoff oder Metall) vor dem nächsten Prozessschritt (zum Beispiel Gießen in Sandformen, Oberflächenfinish, Wärmebehandlung metallgedruckter Teile) entfernt werden, um die Geometrie des angestrebten Endproduktes nicht zu verändern.

Bisher werden solche Restpulverpartikel üblicherweise auf einer offenen Finish-Station mittels Druckluft, Pinsel, Staubsauger und anderen Werkzeugen von einem Werker manuell vom 3D-gedruckten Bauteil entfernt. Dies hat jedoch erhebliche Nachteile. Denn trotz einer zugeordneten Absaugung ergibt sich ein hoher Grad an Staubbildung und somit zwangsläufig eine gesundheitlich bedenkliche Belastung für den Werker. Weiterhin erfordern diese Varianten eine höhere Bearbeitungsdauer und können Beschädigungen an den 3D-gedruckten Bauteilen ergeben.

Alternativ ist eine Entfernung von Restpulverpartikeln mit einem Strahlmittel möglich. Allerdings ergeben sich auch hierbei Nachteile: Sofern das für den Druck verwendete Pulvermaterial und das beim Strahlvorgang verwendete Strahlmittel nicht artgleich sind, wird das zu entfernende Material mit dem Strahlmittel vermischt und kann nicht sortenrein abgeschieden werden. Da die für den 3D-Druck verwendeten hochwertigen und feinen Pulver sehr kostenintensiv sind, ist es unter Kostenaspekten zumeist nicht gerechtfertigt, beim Strahlen ein zum 3D-Druck artgleiches Pulver zu verwenden. Demzufolge erfordert ein Recycling des abgeschiedenen Materials eine Trennung von Restpulver und Strahlmittel, die unabhängig vom zusätzlichen Aufwand oftmals auch technisch nur bedingt zu realisieren ist.

Zur Überwindung der Nachteile der oben erläuterten prinzipiellen Verfahren ist der Fachmann bestrebt, ausgewählte Merkmale beider Verfahren in einer vorteilhaften Weise zu kombinieren. Aus der Patentliteratur sind diesbezüglich bereits mehrere Lösungsvorschläge bekannt.

So beschreibt US 2018 297 284 A1 ein System zum Trennen von Objekten in einem Pulverbett. Die Trennung erfolgt direkt im Bauraum, in dem die Objekte erzeugt worden sind. Formsand bzw. überschüssiges Pulver werden durch verschiedene Techniken bewegt und vorzugsweise von den Objekten abgeblasen. Dabei wird in einer Variante vorgeschlagen, das Material durch eine Unterstützung mittels Vakuum abzusaugen.

Aus US 101 89 057 B2 ist eine Vorrichtung zum Entfernen von Partikeln von der Oberfläche eines 3D-gedruckten Werkstücks bekannt. Dabei ist das Werkstück auf einer drehbaren Plattform in einer Umhausung angeordnet, die eine Öffnung zur Handhabung des Werkstückes aufweist. Das Werkstück wird mit einem Druckfluid beaufschlagt. Durch das Druckfluid und eine Vibration der Plattform wird vom Werkstück überschüssiges Pulver entfernt, das infolge der Schwerkraft nach unten fällt. Auch hier wird alternativ eine Absaugung mittels Vakuum vorgeschlagen.

Gegenstand von CN 108 500 268 A ist eine Anlage für additiv hergestellte Bauteile, bei der überschüssiges Pulver mit einer Luftblasvorrichtung von den Bauteilen entfernt und mittels einer Luftabsaugvorrichtung abtransportiert wird. Das Pulver gelangt über eine Rohrleitung und zugeordnete Siebe in einen Sammelbehälter.

DE 10 2018 121 915 B3 betrifft ein Verfahren zum Behandeln einer Oberfläche eines mittels 3D-Druck hergestellten Formteils, das in einen druckdichten Behälter eingebracht wird. Danach wird im Behälter zunächst ein Vakuum erzeugt und dann ein erwärmtes Lösungsmittel in den Behälter eingeleitet. Der Lösungsmitteldampf kondensiert an der Oberfläche des Formteils. DE 10 2018 121 915 B3 offenbart dazu eine Vorrichtung die einen Warenträger und ein als Saugstrahlkabine ausgestaltetes Gehäuse aufweist, wobei im Gehäuse eine bewegbare Plattform angeordnet ist, wobei der Innenraum des Gehäuses mit einer Einrichtung zur Erzeugung eines Unterdrucks in Wirkverbindung steht, wobei das Gehäuse mehrere druckdicht verschließbare Öffnungen aufweist, in denen jeweils rohrförmige Zuleitungen angeordnet sind, welche in den Innenraum des Gehäuses münden und mit denen im Innenraum des Gehäuses ein Volumenstrom erzeugbar ist.

DE 10 2015 215 728 A1 betrifft eine Anlage für das Behandeln eines Werkstücks mit einem Prozessfluid. Diese Anlage weist eine verschließbare Arbeitskammer auf, die mit Vakuum beaufschlagbar ist. In der Arbeitskammer ist ein Gehäuse angeordnet, in dem das zu behandelnde Werkstück aufgenommen wird.

In DE 10 2016 109 212 A1 wird eine Reinigung der Bauteile von anhaftenden Pulverpartikeln mittels Vibration vorgeschlagen. Hierfür wird das gesamte Bauteil in Schwingungen versetzt. Für die Anbindung der Vibration an das Bauteil sind Aufbauplattformen vorgesehen, wobei eine kraftschlüssige Verbindung zwischen Vibrationsgeber und Bauteil als Vorzugsvariante benannt wird. Eine derartige Verbindung der Bauteile mit einer Aufbauplattform ist jedoch für zahlreiche Anwendungen (z.B. beim 3D-Druck von Sandteilen) nicht möglich oder zumindest nicht üblich. Deshalb sind solche Aufbauplattformen bei vielen Vorrichtungen überhaupt nicht vorhanden. Außerdem ist eine Reinigung mittels Vibration bei dreidimensional gedruckten Sandteilen ohnehin nicht möglich, weil solche Bauteile schlecht ankoppeln und aufgrund ihrer geringen Festigkeit zerstört würden.

Der oben erläuterte Stand der Technik vermittelt zwar die Anregung, zum Lösen und zum Transportieren von überflüssigen Pulverpartikeln an 3D-gedruckten Bauteilen ein Vakuum oder zumindest einen Unterdruck aufzubringen. Allerdings sind aus den Fundstellen keine konkreten Hinweise ersichtlich, wie diesbezügliche Verfahren oder Vorrichtungen für in einem Pulverbett gedruckte dreidimensionale Objekte auszuführen sind, um insbesondere schlecht zugängliche Konturabschnitte von Pulverpartikeln reinigen zu können.

Aufgabe der Erfindung ist es, eine technische Lösung zu schaffen, mit der Restpulverpartikel von im Pulverbett-Verfahren 3D-gedruckten Bauteilen in einer gegenüber dem Stand der Technik vorteilhaften Weise entfernt werden können, so dass der Finish-Prozess effizienter gestaltet und die Qualität und Reproduzierbarkeit erhöht werden kann. Dabei soll insbesondere eine wirksame Reinigung von hinterschnittenen und schwer einsehbaren Konturen an einem 3D-gedruckten Bauteil erreicht werden. Weiterhin soll die Staubbelastung für den Werker am Arbeitsplatz reduziert und eine effektive Erfassung des abgetragenen Materials für ein späteres Recycling realisiert werden.

Diese Aufgabe wird durch die technischen Merkmale gemäß Anspruch 1 gelöst. Weitere Ausgestaltungen sind Gegenstand von Unteransprüchen und werden im Ausführungsbeispiel näher beschrieben.

Durch die Anwendung der erfindungsgemäßen Vorrichtung werden die infolge einer Fertigung im Pulverbett anhaftenden Pulverpartikel mittels Unterdruck induziertem Volumenstrom ohne Zusatz von Strahlmittel wirkungsvoll von der Oberfläche der 3D-gedruckten Bauteile entfernt. Dabei ist insbesondere die Ausführung mit rohrförmigen Zuleitungen vorteilhaft, um eine gezielte Beaufschlagung ausgewählter Bauteilabschnitte mit einem unterdruckinduzierten Volumenstrom zu erreichen, der an den beaufschlagten Bauteilabschnitten einen guten Abtrag anhaftender Pulverpartikel und somit eine gute Reinigungswirkung ergibt.

Das abgetragene Material wird nicht durch ein artfremdes Strahlmittel verunreinigt und kann daher wiedergenutzt werden. Bei einer Inlinemessung von geeigneten Qualitätsparametern ist auch ein automatisches Recycling möglich.

Die Reinigung mit einem unterdruckindizierten Volumenstrom ist einfacher als das bisher übliche manuelle Finishen, weil der Werker nicht die ganze Oberfläche des zu finishenden Objektes mit der Hand oder dem Pinsel berühren muss. Der erzeugte Volumenstrom sorgt für einwandfreies Finishen auch hinterschnittiger Konturen. Bei dosierter Anwendung entstehen keine Schäden an der Oberfläche beim Finishen. Die Oberfläche ist sauber gereinigt. Wegen dem notwendigen Aufbringen eines Unterdrucks auf die zu reinigenden Oberflächen erfolgt die Reinigung in einem druckdichten Gehäuse. Deshalb hat der Werker beim Reinigen keinen direkten Kontakt mit dem abzutragenden Material und wird somit keiner Staubemission ausgesetzt.

Nachfolgend wird ein Ausführungsbeispiel der Erfindung anhand der Zeichnung erläutert. Es zeigen:
- Fig. 1: den grundsätzlichen vorrichtungstechnischen Aufbau in stilisierter Darstellung
- Fig. 2: einen beispielhaft stilisierten Funktionsablauf zum Abtragen von Restpulverpartikeln unter
Verwendung der Vorrichtung gemäß Fig. 1 in vier aufeinanderfolgenden Schritten

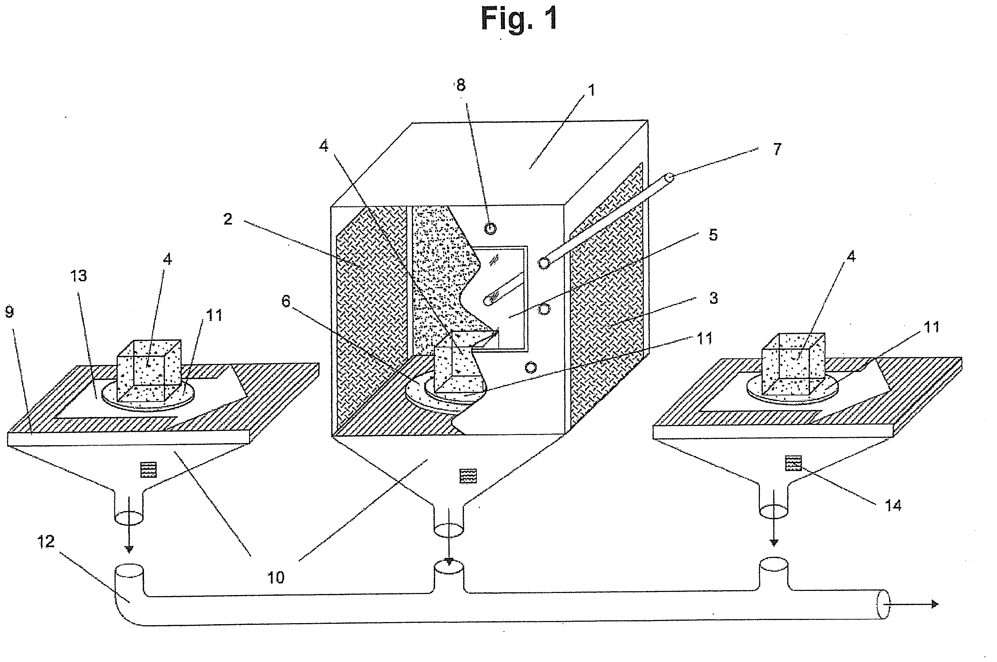

In **Fig. 1** ist eine Ausgestaltung der Vorrichtung in Form einer Taktstraße mit Transportmitteln dargestellt. Mit einer derartigen Ausführung ist eine vorteilhafte Integration in automatisierbare Fertigungsabschnitte möglich. Die Vorrichtung ist jedoch ebenso für eine manuelle Handhabung geeignet.

Unabhängig von der konkreten Ausführung werden die 3D-gedruckten Bauteile 4 in bekannter Weise zunächst in einem hier nicht näher dargestellten Pulverbett gefertigt. Nach Abschluss der Fertigung bzw. Abschluss eines Fertigungsschrittes werden diese 3D-gedruckten Bauteile 4 manuell oder automatisch entpackt und auf einen Warenträger 11 abgelegt. Bei der manuellen Handhabung wird der Warenträger 11 danach händisch einem funktionell als Saugstrahlkabine konzipierten Gehäuse 1 zugeführt. Nachfolgend wird jedoch die bevorzugte Nutzung der Vorrichtung als Komponente einer Taktstraße beschrieben.

Für eine automatisierbare Reinigung sind mehrere gleichartige Warenträger 11 vorgesehen. Die Warenträger 11 weisen einen perforierten Boden auf, durch dessen Öffnungen ein Durchrieseln von abfallenden Pulverpartikeln bzw. sonstigen kleinen Materialteilchen infolge der Schwerkraft nach unten möglich ist.

Die Warenträger 11 werden auf einem Transportsystem 9 angeordnet. Das Transportsystem 9 umfasst eine Fördereinheit 13 (z.B. eine Rollenbahn) und einen Auffangtrichter 10 für abgelöste Pulverpartikel.

Durch Zwischenräume am Transportsystem 9, zum Beispiel durch freie Bauräume zwischen zwei zueinander benachbarten Rollen der als Rollenbahn ausgeführten Fördereinheit 13, können am perforierten Boden des Warenträgers 11 abfallende Pulverpartikel bzw. sonstige kleine Materialteilchen infolge der Schwerkraft weiter nach unten fallen. Diese Wirkung kann durch eine optional zugeordnete Vibrationseinheit 14 zusätzlich unterstützt werden. Unterhalb der Fördereinheit 13 ist mindestens ein Auffangtrichter 10 angeordnet, dessen Ausgang mit einem Leitungssystem 12 in Wirkverbindung steht. Durch das Leitungssystem 12 werden Pulverpartikel oder sonstige Materialteilchen mittels Unterdruck abtransportiert.

Nachdem ein erstes 3D-gedrucktes Bauteil 4 auf dem in Fig. 1 links abgebildeten Warenträger 11 abgelegt ist, wird dieser Warenträger 11 mit Hilfe des Transportsystems 9 in Richtung auf das Gehäuse 1 bewegt, gemäß Fig. 1 also nach rechts. Die entsprechenden Bewegungen sind in Fig. 1 durch Pfeile auf der Oberseite des Transportsystems 9 stilisiert.

Im weiteren Verlauf wird der Warenträger 11 mit dem 3D-gedruckten Bauteil 4 in das Gehäuse 1 eingebracht. Das Gehäuse 1 weist mindestens eine Tür zum Einbringen und Entnehmen der Warenträger 11 auf. In der bevorzugten Ausgestaltung gemäß der Zeichnung ist das Gehäuse 1 mit zwei Türen 2 und 3 ausgestattet. Die Türen 2 und 3 sind an zueinander gegenüberliegenden Seitenflächen des Gehäuses 1 im Konturverlauf des Transportsystems 9 angeordnet und als jeweils druckdicht verschließbare Öffnungen zum Bestücken und Entladen mit 3D-gedruckten Bauteilen 4 ausgestaltet. Demzufolge kann die Vorrichtung nach dem Durchlaufprinzip arbeiten und eine universelle Einordnung in Produktionslinien ist möglich. Die Anordnung der Türen kann Erfordernissen der Produktionslinie angepasst werden, seitliche Positionen sowie Decken- oder Bodenöffnungen sind realisierbar. Optional kann das Gehäuse 1 mit einem Sichtfenster 5 ausgestaltet werden, so dass der Innenraum auch während der Reinigung sichtbar ist. Im Gehäuse 1 liegt der Warenträger 11 mit dem 3D-gedruckten Bauteil 4 auf einer in mehreren Achsen bewegbaren Plattform 6. Somit hat man Zugriff auf das zu reinigende 3D-gedruckte Bauteil 4 von allen Seiten. Nunmehr werden die Türen 2 und 3 druckdicht geschlossen.

Nachfolgend wird im Gehäuse 1 durch eine hierfür geeignete Einrichtung (zum Beispiel eine Vakuumpumpe) ein Unterdruck erzeugt. Dieser Unterdruck ist regelbar. Das Gehäuse 1 weist eine oder mehrere druckdicht verschließbare Öffnungen 8 auf, in denen jeweils rohrförmige Zuleitungen 7 angeordnet werden können, welche das Gehäuse 1 durchdringen. Mit diesen starr oder flexibel ausgeführten Zuleitungen 7 wird im Gehäuse 1 ein Volumenstrom erzeugt.

Dieser Volumenstrom ist durch den Unterdruck im Gehäuse 1 regelbar. Als Medium für den Volumenstrom kann beispielsweise die Umgebungsluft genutzt werden oder Fluide aus einem Tank, zum Beispiel Flüssigkeiten, Gase oder Aerosole. Der Volumenstrom wird mit Hilfe der manipulierbaren rohrartigen Zuleitungen 7 gezielt an das zu reinigende 3D-gedruckte Bauteil 4 gelenkt.

Bei seinem Auftreffen auf das 3D-gedruckte Bauteil 4 löst der Volumenstrom die anhaftenden Pulverpartikel in seinem Wirkungsbereich auf der Oberfläche des 3D-gedruckten Bauteils 4. Die nunmehr abgelösten Pulverpartikel wirbeln auf und lösen durch ihre Bewegung auch andere anhaftende Pulverpartikel. Hierfür wird die kinetische Energie der durch den Volumenstrom beschleunigten Pulverpartikel genutzt. Durch eine Modulierung des Volumenstromes mittels Pulsen kann der Energieeintrag weiter erhöht werden. Es entsteht dadurch kurzzeitig ein stärkerer Pulsvolumenstrom gegenüber dem Grundvolumenstrom, der zu einer stärkeren Beschleunigung der Partikel führt. Dadurch lässt sich zusätzlich auf unterschiedliche Oberflächenausbildungen des zu reinigenden Teiles reagieren. Eine solche Modulierung des Volumenstromes kann vorzugsweise mit einem (in der Zeichnung nicht dargestellten) elektromagnetisch gesteuerten Proportionalventil realisiert werden.

Durch den anliegenden Unterdruck wird verhindert, dass sich die gelösten Pulverpartikel wieder auf der zu reinigenden Oberfläche des 3D-gedruckten Bauteils 4 anlagern. Stattdessen bleiben sie in Bewegung und werden durch den vom Unterdruck indizierten Volumenstrom im Gehäuse 1 erfasst und durch das Leitungssystem 12 zu einer nicht gezeigten Abscheideeinrichtung transportiert.

Durch Anwendung der erfindungsgemäßen Vorrichtung wird somit im Unterschied zum Druckstrahlen vermieden, dass sich taschenförmige Konturbereiche mit Pulverpartikeln füllen und eine Strahlwirkung verhindert wird. Somit wird insbesondere in engen Konturbereichen wie Verrippungen, Sacklöchern und dergleichen eine effiziente Reinigungswirkung erzielt. Des Weiteren besteht ein Selbstsicherungseffekt gegenüber einer zu starken und damit konturschädigenden Behandlung, da die gelösten Partikel durch den Abtransport dem Wirkbereich entzogen werden und somit nicht endlos zur Verfügung stehen. Ist das lose Material entfernt, erlischt auch der Reinigungseffekt.

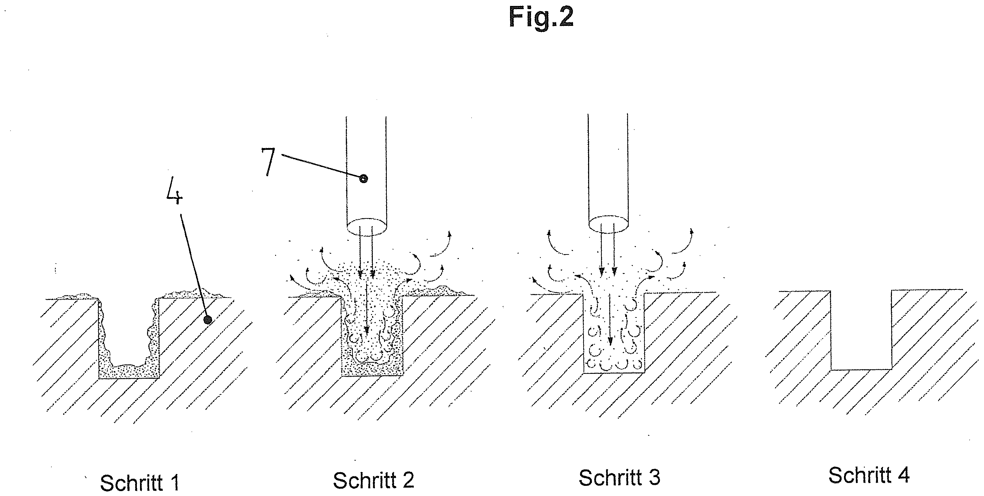

In **Fig. 2** ist beispielhaft das Ablösen und Entfernen von Pulverpartikeln oder anderen kleinen Materialresten aus einem schlecht zugänglichen Konturabschnitt eines 3D-gedruckten Bauteils 4 in vier aufeinanderfolgenden Verfahrensschritten stilisiert dargestellt. Der zu reinigende Konturabschnitt weist hier beispielsweise eine Vertiefung mit einem rechteckigen Querschnitt auf. Schritt 1 zeigt den Zustand nach Abschluss der Fertigung im Pulverbett. Dabei haben sich an der Seitenfläche und am Boden der Vertiefung sowie im Randbereich neben dem Eintrittsquerschnitt der Vertiefung Pulverpartikel angelagert. Im Schritt 2 wird über die rohrförmigen Zuleitungen 7 ein Fluid in Richtung der Bodenfläche der Vertiefung zugeführt, mit dem erste Pulverpartikel gelöst und nach oben aus der Vertiefung entfernt werden. Im Schritt 3 reißen einige der bereits gelösten Pulverpartikel infolge ihrer Bewegung weitere Pulverpartikel mit. Außerdem werden andere Pulverpartikel durch das weiterhin zugeführte Fluid abgelöst und aus dem Bereich der Vertiefung entfernt. Im Schritt 4 sind sämtliche Pulverpartikel aus der Vertiefung gelöst und entfernt, so dass der gezeigte Konturabschnitt nunmehr vollständig von anhaftenden Pulverpartikeln und sonstigen Materialresten gereinigt ist.

Während der Reinigung wird das 3D-gedruckte Bauteil 4 im Gehäuse 1 mittels der bewegbaren Plattform 6 bewegt, so dass seine gesamte Oberfläche mit Fluidvolumenstrom beaufschlagt wird. Die Bewegung der Plattform 6 kann dabei sowohl durch eine manuelle als auch eine automatische Steuerung erfolgen. Um einen noch größeren Abtrageffekt zu erzielen, kann auch zusätzliches Strahlmittel durch die Zuleitungen 7 auf das Bauteil 4 eingebracht werden. Dabei sind jedoch die oben erläuterten Probleme bei der Verwendung von artfremdem Material zu beachten, so dass primär artgleiches Material in Form von gebrauchtem Pulver oder Neumaterial benutzt werden sollte.

Nach Abschluss der Reinigung wird der Unterdruck im Gehäuse 1 aufgehoben und die beiden Türen 2 und 3 werden geöffnet. Danach wird der Warenträger 11 mit dem gereinigten 3D-gedruckten Bauteil 4 aus dem Gehäuse 1 durch eine Tür 2 oder 3 auf das Transportsystem 9 verlagert.

Aus den vorstehenden Darlegungen ist ersichtlich, dass die erfindungsgemäße Vorrichtung zwei grundlegende Komponenten aufweist - einen Arbeitsbereich und einen Abscheidebereich. Der Arbeitsbereich umfasst das druckdichte Gehäuse 1, die manipulierbaren Zuführungen 7 für den Volumenstrom und das Transportsystem 9. Der Abscheidebereich umfasst eine Baugruppe zur Erzeugung des Unterdrucks, eine Filteranlage und Abscheider. Mit einer doppelten Abscheidung und durch geeignete Filter wird gewährleistet, dass staubfreie Luft aus der Anlage kommt.

Die druckdicht verschließbaren Türen 2 und 3, das Transportsystem 9, die bewegbare Plattform 6 und die rohrförmigen Zuleitungen 7 können manuell bedient werden. Vorzugsweise werden die Funktionen der Vorrichtung wie Bewegung des Transportsystems 9, Erzeugung von und Beaufschlagung mit Unterdruck, Tür 2 bzw. 3 öffnen und schließen, Bewegung der Plattform 6, Manipulation der Volumenstromführung usw. jedoch von einem Bedienerpult gesteuert. Dabei ist es auch möglich, dass die druckdicht verschließbaren Türen 2 und 3, das Transportsystem 9, die bewegbare Plattform 6 sowie die rohrförmigen Zuleitungen 7 über Aktuatoren und eine speicherprogrammierbare Steuerung gesteuert werden.

### Bezugszeichenliste

- 1: Gehäuse / Saugstrahlkabine
- 2: druckdicht verschließbare Tür
- 3: druckdicht verschließbare Tür
- 4: 3D-gedrucktes Bauteil
- 5: Sichtfenster
- 6: Plattform
- 7: rohrförmige Zuleitung
- 8: druckdicht verschließbare Öffnung
- 9: Transportsystem
- 10: Auffangtrichter
- 11: Warenträger
- 12: Leitungssystem
- 13: Fördereinheit / Rollenbahn
- 14: Vibrationseinheit

## Patentansprüche

1. Vorrichtung, geeignet zur Reinigung von im Pulverbett gedruckten dreidimensionalen Bauteilen (4), d.h. 3-D gedruckten Bauteilen (4), von anhaftenden Pulverpartikeln, wobei die Vorrichtung derart ausgeführt ist, dass die 3D-gedruckten Bauteile (4) mit einem unterdruckinduzierten Volumenstrom gereinigt werden, indem diese 3D-gedruckten Bauteile (4) nach ihrer Fertigung zunächst aus dem Pulverbett entnommen werden, danach auf einer Zuführvorrichtung positioniert und gemeinsam mit dieser in einen druckdicht abschottbaren Raum verlagert werden, in dessen Innenraum nachfolgend ein Unterdruck aufgebaut und auf das zu reinigende 3D-gedruckte Bauteil (4) ein Fluid-Volumenstrom aufgebracht wird, wodurch Pulverpartikel vom 3D-gedruckten Bauteil (4) gelöst werden, die über mindestens eine mit Unterdruck beaufschlagbare Kanalkontur aus dem druckdicht abschottbaren Raum abgeführt und einer Abscheideeinrichtung zugeführt werden, wobei nachfolgend der druckdicht abschottbare Raum zunächst druckentlastet und danach zur Entnahme des gereinigten 3D-gedruckten Bauteils (4) geöffnet wird, wobei die Vorrichtung mindestens einen Warenträger (11) zur Aufnahme eines zu reinigenden 3D-gedruckten Bauteils (4) und ein als Saugstrahlkabine ausgestaltetes Gehäuse (1) umfasst, wobei der Warenträger (11) einen perforierten Boden aufweist und mit einem Transportsystem (9) in das Gehäuse (1) verlagerbar ist, wobei das Gehäuse (1) mindestens eine druckdicht verschließbare Tür (2, 3) zum Einbringen und Entnehmen der Warenträger (11) aufweist, wobei im Gehäuse (1) eine in mehreren Achsen bewegbare Plattform (6) zur Aufnahme eines zu reinigenden 3D-gedruckten Bauteils (4) angeordnet ist, wobei der Innenraum des Gehäuses (1) mit einer Einrichtung zur Erzeugung eines Unterdrucks in Wirkverbindung steht, wobei das Gehäuse (1) eine oder mehrere druckdicht verschließbare Öffnungen (8) aufweist, in denen jeweils rohrförmige Zuleitungen (7) angeordnet sind, welche in den Innenraum des Gehäuses (1) münden und mit denen im Innenraum des Gehäuses (1) ein Volumenstrom erzeugbar ist und wobei der Warenträger und der Innenraum des Gehäuses (1) über jeweils einen Auffangtrichter (10) mit einem mit Unterdruck beaufschlagbaren Leitungssystem (12) verbunden sind, das mit einer Abscheideeinrichtung in Wirkverbindung steht.

2. Vorrichtung nach Anspruch 1, **dadurch gekennzeichnet,**
**dass** mindestens ein Warenträger (11) auf einem Transportsystem (9) angeordnet ist.

3. Vorrichtung nach Anspruch 2, **dadurch gekennzeichnet,**
**dass** das Transportsystem (9) eine Rollenbahn als Fördereinheit (13) aufweist.

4. Vorrichtung nach Anspruch 1, **dadurch gekennzeichnet,**
**dass** das Gehäuse (1) mit zwei Türen (2 und 3) ausgestattet ist, die an zueinander gegenüberliegenden Seitenflächen des Gehäuses (1) im Konturverlauf des Transportsystems (9) angeordnet sind.

5. Vorrichtung nach Anspruch 1, **dadurch gekennzeichnet,**
**dass** die rohrförmigen Zuleitungen (7) manuell bedient oder über ein Bedienpult gesteuert werden.

6. Vorrichtung nach Anspruch 1, **dadurch gekennzeichnet,**
**dass** die rohrförmigen Zuleitungen (7) über Aktuatoren und eine speicherprogrammierbare Steuerung gesteuert werden.

7. Vorrichtung nach Anspruch 1, **dadurch gekennzeichnet,**
**dass** die Vorrichtung ein elektromagnetisch gesteuertes Proportionalventil aufweist, mit dem der Volumenstrom modulierbar ist.

8. Vorrichtung nach Anspruch 1, **dadurch gekennzeichnet,**
**dass** das Medium für den Volumenstrom Umgebungsluft ist.

9. Vorrichtung nach Anspruch 1, **dadurch gekennzeichnet,**
**dass** das Medium für den Volumenstrom Flüssigkeiten oder Gase oder Aerosole sind.

## Claims

1. A device suitable for cleaning three-dimensional components (4) printed in a powder bed, i.e. 3D-printed components (4) from adhering powder particles, wherein the device is designed in such a way that the 3D-printed components (4) are cleaned with a negative pressure-induced volume flow by first removing these 3D-printed components (4) from the powder bed after their production, then positioning them on a feeding device and moving them together with the latter into a pressure-tight sealable space, in the interior of which a negative pressure is subsequently built up and a fluid volume flow is applied to the 3D-printed component (4) to be cleaned, whereby powder particles are detached from the 3D-printed component (4), which are discharged from the pressure-tight sealable space via at least one channel contour which can be subjected to negative pressure and are fed to a separating device, wherein the pressure-tight sealable space is subsequently first depressurized and then opened for removal of the cleaned 3D-printed component (4), wherein the device comprises at least one product carrier (11) for receiving a 3D-printed component (4) to be cleaned and a housing (1) designed as a suction jet cabin, wherein the product carrier (11) has a perforated bottom and is displaceable into the housing (1) by means of a transport system (9), wherein the housing (1) has at least one door (2, 3) which can be closed in a pressure-tight manner for inserting and removing the product carrier (11), wherein a platform (6) which can be moved in a plurality of axes is arranged in the housing (1) for receiving a 3D-printed component (4) to be cleaned, wherein the interior of the housing (1) is operatively connected to a device for generating a negative pressure, wherein the housing (1) has one or more openings (8) which can be closed in a pressure-tight manner and in each of which tubular feed lines (7) are arranged which open into the interior of the housing (1) and with which a volume flow can be generated in the interior of the housing (1), and wherein the product carrier and the interior of the housing (1) are each connected via a collecting funnel (10) to a line system (12) which can be subjected to negative pressure and which is operatively connected to a separating device.

2. The device according to claim 1, **characterized in that**
at least one product carrier (11) is arranged on a transport system (9).

3. The device according to claim 2, **characterized in that**
the transport system (9) has a roller conveyor as a conveyor unit (13).

4. The device according to claim 1, **characterized in that**
the housing (1) is equipped with two doors (2 and 3), which are arranged on opposite side surfaces of the housing (1) in the contour of the transport system (9).

5. The device according to claim 1, **characterized in that**
the tubular feed lines (7) are operated manually or controlled via a control panel.

6. The device according to claim 1, **characterized in that**
the tubular feed lines (7) are controlled via actuators and a programmable logic controller.

7. The device according to claim 1, **characterized in that**
the device has an electromagnetically controlled proportional valve with which the volume flow can be modulated.

8. The device according to claim 1, **characterized in that**
the medium for the volume flow is ambient air.

9. The device according to claim 1, **characterized in that**
the medium for the volume flow is liquids or gases or aerosols.

## Revendications

1. Dispositif adapté au nettoyage de composants tridimensionnels (4) imprimés dans un lit de poudre, c'est-à-dire de composants constitués de particules de poudre adhésive imprimés en 3D (4), le dispositif étant réalisé de telle sorte que les composants (4) imprimés en 3D sont nettoyés à l'aide d'un débit volumique induit par dépression, en ce que ces composants (4) imprimés en 3D sont d'abord retirés du lit de poudre après leur fabrication, puis positionnés sur un dispositif d'alimentation et déplacés avec celui-ci dans un espace pouvant être isolé de manière étanche à la pression, à l'intérieur duquel une dépression est ensuite créée, un débit volumique de fluide étant appliqué sur le composant imprimé en 3D (4) à nettoyer, ce qui permet de détacher les particules de poudre du composant imprimé en 3D (4), lesquelles sont évacuées de l'espace pouvant être isolé de manière étanche à la pression, par au moins un contour de conduit pouvant être soumis à une dépression et sont amenées à un dispositif de séparation, l'espace pouvant être isolé de manière étanche à la pression étant ensuite tout d'abord dépressurisé, puis ouvert pour le prélèvement du composant imprimé en 3D (4) nettoyé; le dispositif comprenant au moins un support de produits (11) destiné à recevoir un composant imprimé en 3D (4) à nettoyer et un caisson (1) conçu comme une cabine à jet aspirant, le support de produits (11) présentant un fond perforé et pouvant être déplacé dans le caisson (1) à l'aide d'un système de transport (9), le caisson (1) présentant au moins une porte (2, 3) pouvant être fermée de manière étanche à la pression pour l'introduction etle retrait des supports de produits (11), une plate-forme (6) mobile selon plusieurs axes étant disposée dans le caisson (1) pour recevoir un composant imprimé en 3D à nettoyer (4), l'espace intérieur du caisson (1) étant en liaison active avec un dispositif permettant de générer une dépression, le caisson (1) présentant une ou plusieurs ouvertures (8) pouvant être fermées de manière étanche à la pression, dans lesquelles sont respectivement disposées des conduites d'alimentation tubulaires (7) débouchant dans l'espace intérieur du caisson (1) et à l'aide desquelles un débit volumique peut être généré dans l'espace intérieur du caisson (1), et le support de produits et l'espace intérieur du caisson (1) étant respectivement reliés, par l'intermédiaire d'un entonnoir collecteur (10), à un système de conduites (12) pouvant être soumis à une dépression, en liaison active avec un dispositif séparateur.

2. Dispositif selon la revendication 1, **caractérisé en ce que**,
au moins un support de produits (11) est disposé sur un système de transport (9).

3. Dispositif selon la revendication 2, **caractérisé en ce que**,
le système de transport (9) présente un convoyeur à rouleaux comme unité de transport (13).

4. Dispositif selon la revendication 1, **caractérisé en ce que**,
le caisson (1) est équipé de deux portes (2 et 3) disposées sur des surfaces latérales du caisson (1) opposées l'une à l'autre dans le tracé de contour du système de transport (9).

5. Dispositif selon la revendication 1, **caractérisé en ce que**,
les conduites d'alimentation tubulaires (7) sont commandées manuellement ou par l'intermédiaire d'un pupitre de commande.

6. Dispositif selon la revendication 1, **caractérisé en ce que**,
les conduites d'alimentation tubulaires (7) sont commandées par des actionneurs et un automate programmable industriel.

7. Dispositif selon la revendication 1, **caractérisé en ce que**,
le dispositif présente une vanne proportionnelle à commande électromagnétique, permettant de moduler le débit volumique.

8. Dispositif selon la revendication 1, **caractérisé en ce que**,
le fluide utilisé pour générer le débit volumique est l'air ambiant.

9. Dispositif selon la revendication 1, **caractérisé en ce que**,
les substances utilisées pour générer le débit volumique sont des liquides, des gaz ou des aérosols.
